(19) Europäisches Patentamt
European Patent Office
Office européen des brevets

(11) Publication number: **0 200 073 A2**

(12) # EUROPEAN PATENT APPLICATION

(21) Application number: **86105102.7**

(51) Int. Cl.⁴: **C05B 11/08**

(22) Date of filing: **14.04.86**

(30) Priority: **23.04.85 IT 2045585**

(43) Date of publication of application: **10.12.86 Bulletin 86/45**

(84) Designated Contracting States: **AT BE CH DE FR GB IT LI LU NL SE**

(71) Applicant: **ENICHEM AGRICOLTURA S.p.A.**
**Via Ruggero Settimo 55**
**I-90139 Palermo(IT)**

(72) Inventor: **Bianchi, Angelo**
**Via Carnevali, 3**
**Ravenna(IT)**
Inventor: **Mantellini, Giorgio**
**Piazza M. Pagano, 5**
**Forli(IT)**
Inventor: **Anania, Guido**
**Viale Cortemaggiore, 21**
**Gela (CL)(IT)**
Inventor: **Russo, Francesco**
**Via G. D'Annunzio, 1**
**Monza (MI)(IT)**

(74) Representative: **Orazi, Ornelio et al**
**c/o ENIRICERCHE S.p.A. Via F. Maritano, 26**
**I-20097 San Donato Milanese(IT)**

(54) **Process for the production of ammonium phosphates from phosphates rocks.**

(57) A process is disclosed for the production of ammonium phosphates starting from phosphate rocks, comprising a grinding of such rocks, a chemical attack with sulphuric acid and ammonium sulphate, and a filtration of the reaction pulp, characterized in that the chemical treatment of the rocks is carried out in one single stage under isothermal conditions at a temperature ranging from 70 of 90°C.

EP 0 200 073 A2

Rank Xerox

# "PROCESS FOR THE PRODUCTION OF AMMONIUM PHOSPHATES FROM PHOSPHATES ROCKS"

The present invention relates to a process for the production of ammonium phosphates starting from phosphate rocks. The treatment is known of the phosphate rocks with strong acids such as, e.g., sulphuric acid, nitric acid, hydrochloric acid.

The most commonly used among these is sulphuric acid, which allows converting all calcium contained in the phosphate ore into calcium sulphate, which is then removed by filtering.

The reaction in this case is as follows:

$Ca_3(PO_4)_2 + 3\ H_2SO_4 + 6H_2O \rightarrow 3\ CaSO_4.2\ H_2O + 2\ H_3PO_4$

The phosphoric acid solution extracted is then submitted to concentration and subsequent ammoniation.

From the Czechoslovakian Patent No. 142533, decomposing the phosphate rocks by means of sulphuric acid and ammonium sulphate in three steps is known as well.

In the first step, for the decomposition sulphuric acid is used, in the second step ammonium sulphate and/or ammonium bisulphate, in the third step sulphuric acid is used again.

A process for the production of ammonium phosphates has been now surprisingly found, starting from phosphate rocks which are decomposed by means of sulphuric acid and ammonium sulphate under suitable conditions in one reaction step only, which allows the required amount of treatment agents (sulphuric acid and ammonium sulphate) to be reduced, at the same time reducing the equipment installation costs.

The process being the object of the present invention for the production of ammonium phosphates starting from phosphate rocks, which comprises a step of grinding of said rocks, a chemical attack with sulphuric acid and ammonium sulphate and a filtration of the reaction pulp, is characterized in that the attack is carried out in one single step, under isothermal conditions, at a temperature comprised within the range of from 70 to 90°C.

The temperature control (the reactions which take place are exothermic) can be carried out by surface evaporation in vacuo.

The attack of the rocks can be accomplished by means of an equipment provided with such a stirring device as to secure conditions of temperature and of concentrations of the chemical species present and of suspended solids as uniform as possible.

The main reaction on which said process is based is the following:

$Ca_3PO_4 + 2\ H_2SO_4 + (NH_4)_2SO_4 + 6\ H_2O \rightarrow$

$\rightarrow 3\ CaSO_4.2H_2O + 2NH_4H_2PO_4$

The process being the object of the present invention allows replacing portions of sulphuric acid with ammonium sulphate and saving ammonia compared to the traditional production process through phosphoric acid and the subsequent ammoniation thereof. This point is of undoubted financial interest if one thinks that presently large amounts are available of ammonium sulphate, obtained as byproduct from some industrial processes(e.g., caprolactam production) or from plants for the sequestering of sulphur oxides from flue gases.

Under the conditions of the process, dihydrate calcium sulphate crystallizes off, in an easily separable form, which, together with precipitated impurities and unreacted rock, constitutes the gypsum subsequently removed by filtration and washed with countercurrent water for the recovery of nitrogen and $P_2O_5$.

The process disclosed allows also operating with concentrations of $P_2O_5$ in the reaction pulp higher than in the known dihydrate processes for the production of diluted phosphoric acid with reduced formation of hemihydrate calcium sulphate (involving filtering difficulties).

This element has a positive incidence on the consumption of steam in the step of concentration of the solution produced, when this is processed to solid fertilizer.

Moreover, the adaptability has been experimentally demonstrated of the proposed method to the processing of phosphate rocks from different sources and having different compositions (Algerian, Moroccan rocks, and so forth). In these cases, the treatment yield [(dissolved $P_2O_5$/insoluble $P_2O_5$ in the rock) x 100] reaches industrially acceptable values (92-95%).

Hereunder some preferable typical parameters of the attack step are reported:

-Granulometry of ground rock: 90% < 200 mesh (0.074 mm);

- Excess of $SO_4$ (from $H_2SO_4$ and $(NH_4)_2SO_4$): lowe

than or equal to 10% relatively to the stoichiometrically equivalent amount of CaO contained in the rock;

-Residence time of the pulp: 2.5 -4 hours.

Thanks to the treatment process as above mentioned, a pulp is produced which, by separation of the gypsums, yields a partially ammoniated filtrate (pH ≥ 2.5).

This filtrate, when the ammoniation i$ completed, by the addition of anhydrous ammonia, up to the desired level (for MAP, up to pH = 4.5-5), is submitted to traditional operations of fertilizers industry (concentration of the solution, pelletizing, drying).

The proposed attack process and the subsequent operations can be executed in continuous.

The invention shall be now better disclosed with the aid of the flow sheet of attached Figure, showing a preferred embodiment, but which is not to be considered as limitative of the same invention.

The phosphate rock (1) is suitably ground in a mill (2) and previously mixed in a pre-mixer (3) with a washing solution (4) from which a mixture (5), which is sent to the rection equipment (6), is obtained. Sulphuric acid (7), also in highly concentrated solution, is supplied to the reaction equipment in the point (8), and is fed by devices of various types (sprayers, and so forth), not shown in the flow sheet.

Ammonium sulphate (9) is sent to the reaction equipment in the point (10). When it is available in the solid state, it is previously mixed with the above mentioned washing solution (4) in a premixer (11). From the top (12) of the reactor,the vapours evolving from the reaction are removed by means of a vacuum system.

The reaction pulp (13) is on the contrary first sent into a tank (14), then filtered on a filter (15) to separate the gypsums (16).

From the pipe (17) the desired solution is drawn. Finally, by the pipe (18) the recycle solution containing nitrogen and $P_2O_5$, obtained by countercurrent washing the gypsums with water (19), is recycled.

As an alternative to the above, the phosphate rock and ammonium sulphate can be mixed at the same time with the recycled washing solution and the so-obtained mixture is sent to the reaction equipment.

Examples 1 -2

The results are reported of treatment tests for two types of phosphate rocks:

1) Rock from Algerian source (low grade, high content in impurities);

2) Rock from Moroccan source (h1gh grade, low content in impurities);

using sulphuring acid and ammonium sulphate as the treatment agents.

The attack tests have been carried out in an equipment designed to accomplish conditions as isothermal as possible, and of concentration of the chemical species in solution and of the suspended solids as uniform as possible.

The attached Tables A, B, C report, respectively, the compositions of the phosphate rocks used, the granulometries of the same submitted to the reaction, and the operational attack parameters.

The filtrates obtained (pH ≈ 2.5) have been subsequently submitted to the ammoniation completion (pH 4.5) by addition of ammonia. The ammoniated solutions have been evaporated to dryness, and the salt obtained has been analyzed - (Table D).

Table_A

Composition_of_Phosphate_Rock

| | Algerian_(1) | Moroccan_(2) |
|---|---|---|

| | | |
|---|---|---|
| BPL (*) | 63.4 % | 76.5 % |
| $P_2O_5$ | 29.0 % | 35.0 % |
| CaO | 50.1 % | 50.9 % |
| $SO_4$ | 3.5 % | 0.77 % |
| F | 2.0 % | 3.4 % |
| Fe | 0.24% | 0.10 % |
| Al | 0.25% | 0.22 % |
| Mg | 0.67% | 0.055% |

(*) BPL = Bone Phosphate of Lime (i.e., equivalent tri-calcium phosphate).

Table B

Granulometry of Ground Rock

| | Algerian (1) | Moroccan (2) |
|---|---|---|
| 100 mesh | 0.1% | 2.4% |
| 100 - 200 mesh | 0.8% | 7.5% |
| 200 - 325 mesh | 9.0% | 68.2% |
| 325 mesh | 90.1% | 21.9% |

Table C

Attack Operational Parameters

| | Algerian (1) | Moroccan (2) |
|---|---|---|
| Phosphate rock feed : | 300 (kg/hr) | 300 (kg/hr) |
| 96% $H_2SO_4$ feed : | 214 (kg/hr) | 204 (kg/hr) |
| 100% $(NH_4)_2SO_4$ feed : | 66 (kg/hr) | 97 (kg/hr) |
| Reaction temperature: | 85°C | 85°C |
| Retention time : | 3 hours | 3 hours |
| Attack yield : | 92.0% | 92.6% |

Table D

Composition of MAP (Mono Ammonium Phosphate) Produced (*)

| | Algerian (1) | Moroccan (2) |
|---|---|---|
| MAP Produced | 167 (kg/hr) | 229 (kg/hr) |

| | | |
|---|---|---|
| Total $P_2O_5$ | 47.41% | 41.8 % |
| Available $P_2O_5$ | 47.17% | 41.7 % |
| Water-soluble $P_2O_5$ | 46.80% | 41.2 % |
| Ammoniacal N | 11.74% | 14.3 % |
| Total $SO_4$ | 11.77% | 19.4 % |
| F | 1.96% | 3.57 % |
| Ca | 0.49% | 0.45 % |
| Mg | 0.83% | 0.072% |
| Al | 0.07% | 0.06 % |
| Fe | 0.11% | 0.12 % |

* The product denominated "MAP" contains, in addition to the very mono ammonium phosphate - (i.e., $NH_4H_2PO_4$), further compounds (ammonium sulphate, and so forth), in minor amounts, wich reduce the grade of the fertilizer obtained.

**Claims**

1. Process for the production of ammonium phosphates starting from phosphate rocks, comprising a step of grinding of said rocks, a chemical treatment with sulphuric acid and ammonium sulphate and a filtration of the reaction pulp, characterized in that the chemical treatment is carried out in one single step, under isothermal conditions, at a temperature comprised within the range of from 70 to 90°.

2. Process according to claim 1, wherein the chemical treatment in carried out by introducing amounts of sulphate ions, supplied by sulphuric acid and ammonium sulphate, non higher than 10% relatively to the stoichiometrically equivalent amount of calcium oxide contained in the rock which is being decomposed.

3. Process according to claim 1, wherein the isothermal conditions are accomplished by surface evaporation in vacuo of the reaction pulp.

4. Process according to claim 1, wherein the singlestep chemical treatment is carried out in an equipment provided with a stirring device.

5. Process according to claims 3 and 4,characterized in that it is carried out with a residence time of the pulp comprised within the range of from 2.5 to 4 hours.

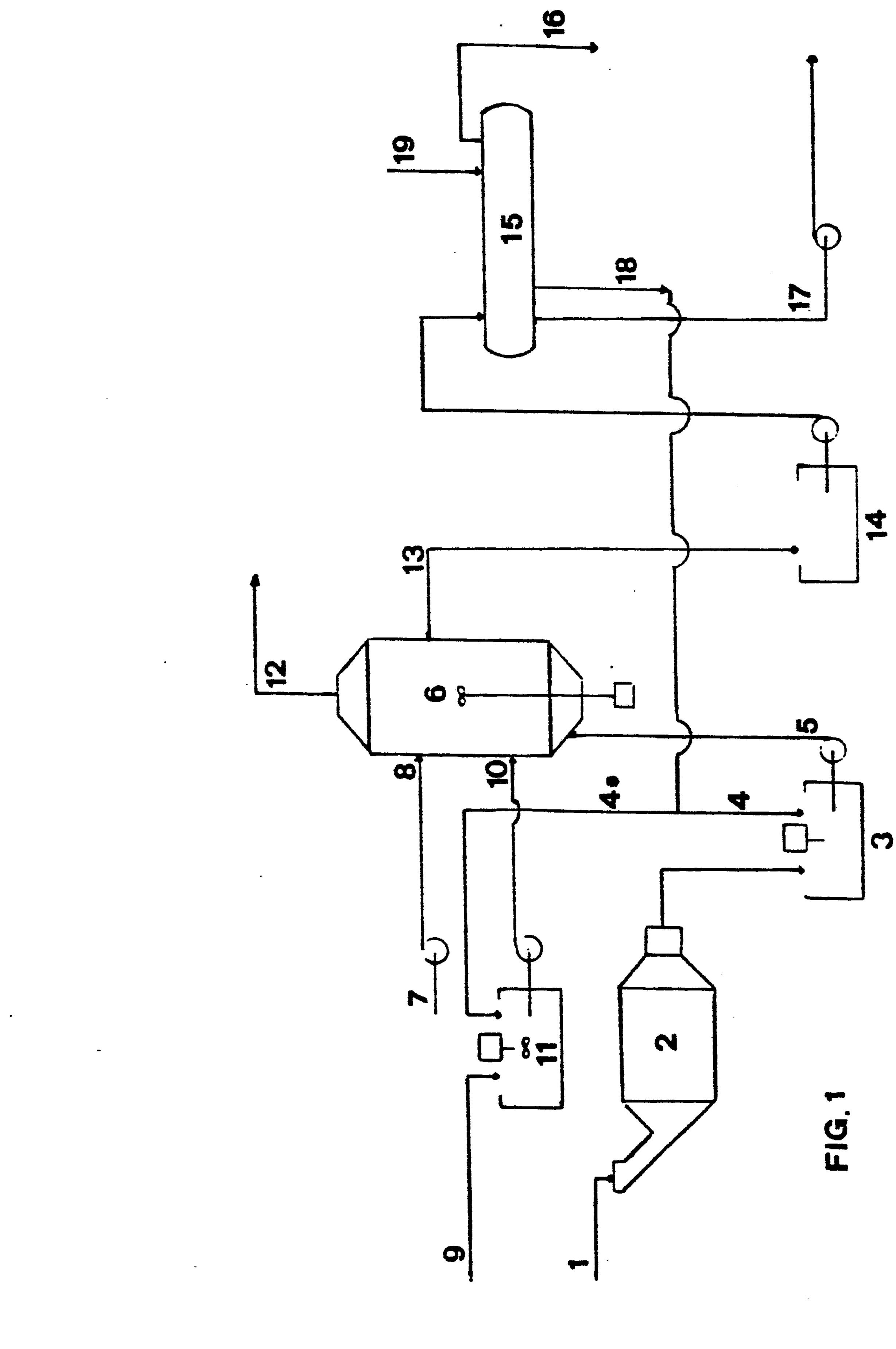


FIG. 1